## Europäisches Patentamt

## European Patent Office

## Office européen des brevets

(19)

(11) Veröffentlichungsnummer: **0 072 582**
**B1**

(12) # EUROPÄISCHE PATENTSCHRIFT

(45) Veröffentlichungstag der Patentschrift:
**18.12.85**

(51) Int. Cl.⁴: **F 02 C 6/12, F 01 D 5/06**

(21) Anmeldenummer: **82200786.0**

(22) Anmeldetag: **25.06.82**

(54) **Abgasturbolader mit zwischen Turbine und Verdichter angeordneter Lagerung.**

(30) Priorität: **18.08.81 CH 5324/81**

(43) Veröffentlichungstag der Anmeldung:
**23.02.83 Patentblatt 83/8**

(45) Bekanntmachung des Hinweises auf die Patenterteilung:
**18.12.85 Patentblatt 85/51**

(84) Benannte Vertragsstaaten:
**CH DE FR GB LI NL**

(56) Entgegenhaltungen:
**CH - A - 471 974**
**DE - B - 1 046 956**
**DE - B - 2 457 231**
**FR - A - 710 454**
**FR - A - 1 285 709**
**FR - A - 2 319 007**
**US - A - 2 668 006**
**US - A - 4 145 875**

(73) Patentinhaber: **BBC Aktiengesellschaft Brown, Boveri & Cie., Haselstrasse, CH-5401 Baden (CH)**

(72) Erfinder: **Ammann, Hansruedi, Nordstrasse 17, CH-5036 Oberentfelden (CH)**
Erfinder: **Hörler, Hansulrich, Dr., Lerchenberg 5, CH-8046 Zürich (CH)**

ACTORUM AG

## Beschreibung

Die vorliegende Erfindung betrifft einen Abgasturbolader mit zwischen Turbine und Verdichter angeordneter Lagerung nach dem Oberbegriff des Patentanspruchs 1.

Bei innengelagerten Turboladern muss der Wellendurchmesser an den Lagerstellen klein gehalten werden, um die Lagerreibungsverluste klein zu halten. Um billige einteilige Büchsen als Lager verwenden zu können, muss die Welle bei der Montage einseitig frei sein, was bedeutet, dass eines der beiden Laufräder erst nach dem Einschieben der Welle durch die ungeteilten Lagerbüchsen auf der Welle befestigt werden kann. Es ist dies in der Regel das Verdichterrad, da das Turbinenrad wegen der hohen Arbeitstemperaturen, denen es ausgesetzt ist und die eine Schrumpfpassung ausschliessen, gewöhnlich mit der Welle verschweisst ist. Die Verbindung des Verdichterrades mit der Welle erfolgt durch eine Schrumpf- oder Presspassung, die bei Reparaturen ohne grosse Schwierigkeiten gelöst werden kann. Sie erleichtert zudem bei der Montage die Einstellung des axialen Spiels einer Planfläche der Welle gegenüber dem Lager zur erforderlichen genauen Positionierung des Verdichterrads im Gehäuse.

Bei einer bekannten Ausführung eines BBC-Turboladers mit einer Pressverbindung von Welle und Verdichterrad wird eine Zwischenbüchse verwendet, die mit einem Konus auf dem freien Wellenende sitzt und gleichzeitig mit einer dem Lager zugewandten Stirnfläche zur Begrenzung des Axialspiels der Welle und genauen Positionierung des Verdichterrades gegenüber seinem Gehäuse dient. Auf dieser Zwischenbüchse sitzt mit einer zylindrischen Presspassung das Verdichterrad. Der Wellenzapfen, auf dem die Zwischenbüchse sitzt, ist dabei praktisch so lang wie die Zwischenbüchse selbst. Die Kegelflächen zwischen Welle und Zwischenbüchse einerseits und die zylindrische Presspassungsfläche zwischen Zwischenbüchse und Nabe des Verdichterrades andererseits erstrecken sich am freien Ende des Wellenzapfens über nur einen Teil der Nabenlänge, vorzugsweise über etwa ein Viertel derselben. Zur axialen Sicherung dieser Verbindung dient eine an der Wellenstirnseite vorgesehene Schraube mit Scheibe.

Zum Abziehen der Zwischenbüchse zusammen mit dem Verdichterrad von der Welle dient ein an der Stirnseite der Zwischenbüchse vorgesehenes Innengewinde, in das eine Abdrückschraube eingesetzt wird.

Die Anordnung der zylindrischen Presspassungsfläche für die Befestigung des Verdichterrades am freien Ende der Zwischenbüchse, d.h., am Ansaugende des Verdichterrades, ergibt sich zwingend aus der Tatsache, dass sich die Nabenbohrung am hinteren Ende des Verdichterrades infolge der Fliehkraft und bei Leichtmetallrädern, insbesondere bei höheren Druckverhältnissen, auch infolge der Erwärmung durch die Kompressionsarbeit zu stark aufweiten würde.

Die Verwendung einer Zwischenbüchse hat den Vorteil, dass sie gemeinsam mit dem Verdichterrad beliebig oft von der Welle abgezogen werden kann, ohne eine Beschädigung der Verbindung zu riskieren.

Die Nachteile dieser Bauart liegen im folgenden. Das lange Wellenende ist einerseits verhältnismässig schwer, andererseits wegen seines verhältnismässig kleinen Durchmessers nicht steif genug, um zu verhindern, dass bei Stössen und kritischen Drehzahlen grosse radiale Ausschläge auftreten, die ein dementsprechend grosses Spiel zwischen Verdichterrad und Gehäuse bedingen. Besonders gefährlich wirkt sich hier die dritte kritische Drehzahl aus, die bei der im Verhältnis zum dünnen Wellenende grossen Masse grosse Ausschläge und dementsprechend grosse Verkrümmungen der Welle verursacht und damit in gefährliche Nähe der Betriebsdrehzahl kommen kann. Im gleichen Sinne wirken schon kleine Fluchtungsfehler im Pressitz, die grössere Exzentrizitäten des Schwerpunktes des Verdichterrades zur Folge haben können, was besonders für Verdichterräder für hohe Druckverhältnisse gilt, die grosse axiale Länge aufweisen. Ein weiterer Nachteil dieser Bauart besteht darin, dass die koaxialen Doppelpresspassungen im gleichen Längenbereich toleranzmässige Schwierigkeiten bereiten.

Eine weitere Turboladerbauart, bei der das Verdichterrad mit dem verdichterseitigen Wellenzapfen über eine Zwischenbüchse verbunden ist, beschreibt die US-A-4 145 875. Sowohl die Bohrung als auch die Aussenfläche der Zwischenbüchse, welche die Nabe des Verdichterrades mit einem Pressitz aufnimmt, sind zylindrisch und die Presspassung erstreckt sich dabei über den mittleren Teil der Nabenbohrung, und zwar über den Bereich von etwa 0,25 bis etwa 0,75 Nabenlänge. Das einlasseitige Viertel der Nabenbohrung ist dabei völlig frei und im gehäuseseitigen Viertel ist die Nabenbohrung grösser als der Zwischenbüchsenaussendurchmesser, so dass Zwischenbüchse und Nabenbohrung dort einen zylindrischen Ringspalt begrenzen. Die Zwischenbüchse sitzt mit einem zylindrischen Bohrungsteil auf einem zylindrischen, dem Lager benachbarten Zapfen des Wellenendes und sie wird über einen Flansch, der als axialer Anschlag für das Verdichterrad fungiert, durch eine am verdichterseitigen Wellenende verschraubbare Mutter gegen den inneren Laufring eines Kugellagers verspannt.

Der Nachteil dieser Bauart liegt bezüglich der Presspassung von Verdichternabe und Zwischenbüchse darin, dass sich die Presspassung über den mittleren Teil der Nabenlänge erstreckt, wo die Aufweitung der Nabenbohrung durch die Fliehkraft noch so gross ist, dass bei Höchstdrehzahl die Flächenpressung auf einem wesentlichen Teil der Passungsfläche reduziert wird oder sogar ganz verloren geht und damit der Kraftschluss zwischen Verdichternabe und Zwischenbüchse nicht mehr voll gewährleistet ist. Bei Stössen könnte dies zum Durchrutschen führen. Die axiale Verspannung durch die erwähnte Mutter am Wellenende trägt zwar zur Haftung zwischen Verdichternabe und Zwischenbüchse bei, doch hat das lange, über die Verdichternabe hinausragende Wellenende mit der Mutter den eingangs erwähnten Nachteil der grossen Masse, die schon bei kleinen Unwuchten grosse radiale Ausschläge auf der Verdichterseite hervorruft.

Gleiches gilt für eine Verbindung von Verdichterrad und Welle bei einem in der US-A-2 668 006 beschriebenen Abgasturbolader. Die dabei verwendete Zwischenbüchse ist ein Kreisringzylinder, der sich vom einlasseitigen Ende des Verdichterrades aus bis zu dessen lagerseitigem Ende erstreckt. Das Verspannen von Welle, Zwischenbüchse und Verdichterrad bewirkt eine Druckschraube am Wellenende, die das Verdichterrad und die Zwischenbüchse axial auf die Welle presst.

Ausserdem erstreckt sich bei dieser Ausführungsform die Länge des Pressitzes wie nach dem obenerwähnten Patent ebenfalls nur auf einen Teil der Länge der Zwischenbüchse, und zwar auf den hinteren, lagerseitigen Teil mit der Massenanhäufung durch die Verdichterschaufeln, wogegen zwischen Nabenbohrung und Zwischenbüchse am einlasseitigen Teil der Nabe ein grosses Spiel besteht.

Diese Nachteile weisen auch die sonstigen bekannten Arten der Welle/Nabe-Verbindungen ohne Zwischenbüchse auf. Bei diesen sitzt die Nabe jeweils mit ihrer vollen Länge spielfrei auf einem zylindrischen oder kegeligen Wellenstumpf, auf dem sie durch eine Schraube oder eine auf einem Gewindezapfen verschraubbare Mutter axial verspannt sind. Als zusätzliche Verdrehsicherung ist häufig noch ein Keil vorgesehen, der nicht nur die Welle schwächt, sondern auch erheblich zur Unwucht beiträgt.

Die vorliegende, im kennzeichnenden Teil des Patentanspruchs 1 definierte Erfindung entstand aus der Aufgabe, bei einem Abgasturbolader die Befestigung des Verdichterrades mit der Welle unter Verwendung einer Zwischenbüchse so auszubilden, dass damit die vorerwähnten Nachteile der bekannten Ausführungen dieser Art vermieden sind.

Der Erfindungsgegenstand wird nachfolgend unter Bezugnahme auf ein in Zeichnung dargestelltes Ausführungsbeispiel näher beschrieben.

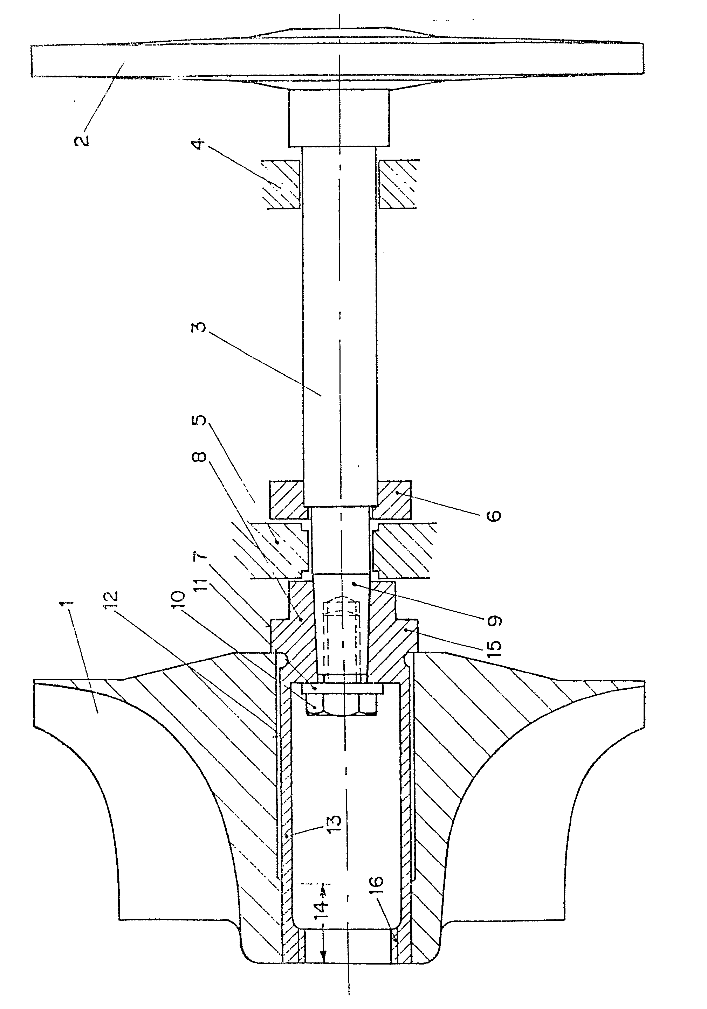

Die einzige Figur der Zeichnung stellt vereinfacht einen Läufer eines Abgasturboladers mit einem Radialverdichterrad 1 und einem Axialturbinenrad 2 dar, die auf den beiden Enden einer Welle 3 sitzen. Das Turbinenrad ist mit der Welle verschweisst, vorzugsweise durch Reibschweissung, wogegen das Verdichterrad lösbar mit der Welle verbunden ist. Die beiden, zwischen Turbinen- und Verdichterrad vorgesehenen Lager 4 und 5 sind schematisch angedeutet. Zur Begrenzung des axialen Bewegungsspiels des Läufers dienen einerseits ein Stellring 6, der an einer Schulter eines Wellenabsatzes anliegt, und andererseits die der Welle 3 zugewandte Stirnfläche einer Zwischenbüchse 7, die wellenseitig zu einer Nabe 8 mit konischer Bohrung verdickt ist. Die Zwischenbüchse sitzt mit dieser konischen Bohrung auf einem konischen Wellenzapfen 9 der Welle 3 und ist in axialer Richtung durch eine Schraube 10 mit Scheibe 11 gesichert.

Das Verdichterrad 1 sitzt auf der langen Zylinderfläche 12 im vorderen, dünnwandigen Teil 13 der Zwischenbüchse, und zwar mit seinem vorderen Teil von der Länge 14 im Bereich des Lufteintritts mit einer drehmomentübertragenden Presspassung, so dass sonstige Elemente zur Drehmomentübertragung entbehrlich sind. Die hintere Stirnfläche des Verdichterrades 1 liegt an einer planen Stirnfläche eines Kammes 15 im Bereich der Nabe 8 an.

Am vorderen offenen Ende der Zwischenbüchse 8 befindet sich ein Innengewinde 16, das zum Abdrücken der Zwischenbüchse mitsamt dem Verdichterrad zwecks Demontage des Läufers dient. Die Welle kann dann mit dem an sie angeschweissten Turbinenrad aus den Lagern herausgezogen werden.

Die Vorteile dieser Verbindung von Welle und Verdichterrad, das üblicherweise aus Leichtmetall besteht, gegenüber der eingangs beschriebenen Bauart liegt in betrieblicher Hinsicht darin, dass die durch unvermeidliche Fertigungsungenauigkeiten verursachten schwingungserregenden Unwuchten wegen der kleineren Masse von Verdichterrad und Wellenzapfen bezüglich Resonanz weniger kritisch sind. Vorteilhaft ist in diesem Sinne auch, dass sich das Verdichterrad auf die steife Zwischenbüchse abstützt anstatt wie bei jener Bauart auf die weniger steife Welle. Auch wirken sich etwaige Fluchtungsfehler nicht so stark aus, da der konische Wellensitz näher am Schwerpunkt des Rades liegt. Es ist innerhalb der Zwischenbüchse auch genügend Platz für eine kräftige Schraube 10 zum Aufpressen der Zwischenbüchse 7 auf den konischen Wellenzapfen 9 vorhanden. Ferner beeinflussen sich die beiden Pressitze gegenseitig nicht, so dass die Materialspannungen kleiner sind und die Masstoleranzen zuverlässiger eingehalten werden können. Da die Welle kürzer ist, wird sie auch billiger.

**Patentansprüche**

1. Abgasturbolader mit zwischen Turbine und Verdichter angeordneter Lagerung der Läuferwelle (3), wobei das Turbinenrad (2) mit dem einen Ende der Welle (3) unlösbar und das Verdichterrad (1) mit einem Wellenzapfen (9) am anderen Ende der Welle (3) über eine Zwischenbüchse (7), auf der das Verdichterrad (1) mit einer Presspassung sitzt, lösbar verbunden und durch eine Schraube (10) axial gesichert ist, dadurch gekennzeichnet, dass die lösbare Verbindung der Zwischenbüchse (7) mit dem Wellenzapfen (9) in einer unmittelbar an das verdichterseitige Lager (5) anschliessenden Nabe (8) der Zwischenbüchse (7) im Bereich zwischen diesem Lager (5) und dem Schwerpunkt des Verdichterrades (1) angeordnet und die Presspassung des Verdichterrades (1) auf einen Teil einer Zylinderfläche (12) der Zwischenbüchse (7) am dem Lufteinlauf in das Verdichterrad (1) zugewandten Ende der Zwischenbüchse (7) begrenzt ist.

2. Abgasturbolader nach Anspruch 1, dadurch gekennzeichnet, dass die lösbare Verbindung der Zwischenbüchse (7) mit dem Wellenzapfen (9) aus einer Paarung des konisch ausgebildeten Wellenzapfens mit einer konischen Bohrung in der Nabe (8) besteht.

**Revendications**

1. Turbocompresseur à gaz d'échappement avec paliers disposés entre la turbine et le compresseur pour supporter l'arbre (3) du rotor, dans lequel la roue (2) de la turbine est fixée à demeure sur un bout de l'arbre (3) et la roue (1) du compresseur est montée de façon amovible sur un tourillon (9) ménagé sur l'autre bout de l'arbre (3), au moyen d'un coussinet intermédiaire (7) sur lequel la roue (1) du compresseur est adaptée par pressage et est bloquée axialement par une vis (10), caractérisé en ce que l'assemblage amovible du coussinet intermédiaire (7) avec le tourillon (9) de l'arbre est disposé dans un moyen (8) du coussinet intermédiaire (7) se rattachant directement au palier (5) du côté compresseur, dans la zone comprise entre ce palier (5) et le centre de gravité de la roue (1) du compresseur et en ce que l'ajustement par pressage de la roue (1) du compresseur sur une portion d'une portée cylindrique (12) du coussinet intermédiaire (7) est limité à l'extrémité du coussinet intermédiaire (7) tournée vers l'admission d'air dans la roue (1) du compresseur.

2. Turbocompresseur à gaz d'échappement suivant la revendication 1, caractérisé en ce que l'assemblage amovible du coussinet intermédiaire (7) avec le tourillon (9) de l'arbre consiste en une adaptation du tourillon à profil conique de l'arbre avec un alésage conique ménagé dans le moyeu (8).

**Claims**

1. Exhaust gas turbocharger having bearings for the rotor shaft (3) located between the turbine and the compressor, wherein the turbine rotor (2) is permanently connected to one end of the shaft (3) and the compressor rotor (1) is releasably connected to a shaft seating (9) at the other end of the shaft (3) via an intermediate bush (7), on which the compressor rotor (1) is seated with a press fit and is secured axially by a bolt (10), characterised in that the releasable connection of the intermediate bush (7) to the shaft seating (9) is located in a hub (8) of the intermediate bush (7) in direct contact with the bearing (5) on the compressor side in the region between this bearing (5) and the centre of gravity of the compressor rotor (1), and the press fit of the compressor rotor (1) is limited to a part of a cylindrical surface (12) of the intermediate bush (7) at the end of the intermediate bush (7) facing towards the air inlet in the compressor rotor (1).

2. Exhaust gas turbocharger according to Claim 1, characterised in that the releasable connection of the intermediate bush (7) to the shaft seating (9) consists of a pairing between the conically shaped shaft seating and a conical hole in the hub (8).